# EUROPEAN PATENT SPECIFICATION

(11) **EP 2 419 792 B1**
(45) Date of publication and mention of the grant of the patent: **19.03.2014**
(21) Application number: 10724886.6
(22) Date of filing: 19.04.2010
(51) Int. Cl.: G03C 7/14, G03C 9/02, G02B 27/22, G03B 33/14

(54) **Light reactive media and methods of recording visible images**
Lichtreaktive Medien und Verfahren zur Aufzeichnung eines sichtbaren Bildes
Milieux réactifs à la lumière et procédés d'enregistrement d'images visibles

(30) Priority: 17.04.2009 GB 0906689; 22.05.2009 GB 0908946
(43) Date of publication of application: 22.02.2012
(73) Proprietor: ILIT Technologies Ltd., CF31 3SH (GB)
(72) Inventor: MILES, Anthony, Bridgend CF31 3SH (GB)
(74) Representative: Cross, James Peter Archibald
(86) International application number: PCT/GB2010/000780
(87) International publication number: WO 2010/119269

(56) References cited:
- US-A1- 2007 003 847
- US-A1- 2008 311 496
- US-B2- 7 166 420

## Description

### Field of the Invention

The present invention relates to light reactive media and to methods of writing images to such media.

### Background of the Invention

There are a number of laser reactive coatings available that are primarily for use in the 'just in time' packaging market. These coatings are usually white and when activated by a laser at a particular frequency exhibit a colour change, for example to produce text, barcodes and/or images. The print quality produced by this process is sufficient for that specific purpose and market, but it is unlikely that this process would compete with conventional desktop printers.

The coatings require a large amount of laser energy to produce the chemical reactions that evoke the colour change in the area to be printed. CO₂ lasers in excess of 10 Watts are used, which are not only extremely expensive and very large, but are also classified as industrial lasers and therefore subject to rigorous safety standards; this precludes them from being used in a desktop application.

The reason such a large, high power laser device is required is due to the chemical reaction in the coating itself. If the coating were made to react to low levels of light, then the chemical reaction would start to take place immediately, and it would be subject to sunlight or any other energy containing light frequencies which are absorbed by the coating. Therefore the coating is made much less reactive to resist the effect of ultraviolet exposure, but this then means that much more energy is be needed to produce an image. '

Another form of printing is lenticular printing, which is generally used for promotional items ranging from product packaging to novelty items like playing cards and drinking cups. The process involves using a number of images interlaced together to form a 3D effect and/or movement, when viewed through a sheet of lenses that allows the viewer to view different images with either eye, or when the eyes move relative to the sheet.

There are a number of ways to produce a lenticular image. In some cases the images are printed directly onto the lens sheet using offset printing. Some products are printed using screen printing. It is also possible to use an inkjet or laser printer to produce the interlaced image and then laminate the image with the lenticular sheet. This requires complex preparation and alignment when applying the lens sheet. The complexity of producing lenticular images has prevented mainstream desktop applications.

Conventional display systems normally involve OLED, plasma, LCD, back projection or other known systems, which require a high level of power, US3166420 discloses a medium with two photochromic layers.

### Statement of the Invention

According to one aspect of the present invention, there is provided a medium reactive to electromagnetic radiation according to claim 1.

An advantage of this arrangement is that a visible image may be formed on the first layer using light of the first frequency, and the image may then be 'fixed' using light of the second frequency such that subsequent irradiation by the first frequency makes substantially no visible difference to the first layer. Thus, the first layer may be made sensitive to low levels of radiation at the first frequency, so that low power light sources may be used.

The further layer may be changeable from being substantially opaque to said first frequency to being substantially transparent to said first frequency, in response to electromagnetic radiation of a third frequency substantially different from the first and second frequencies.

An advantage of this arrangement is that the first layer is protected from the first frequency until an image is to be written to the first layer, whereupon the medium is exposed to the third frequency, prior to writing using the first frequency.

The further layer may comprise a second layer changeable from being substantially transparent to said first frequency to being substantially opaque to said first frequency, in response to said second frequency.

The further layer may comprise a third layer changeable from being substantially opaque to said first frequency to being substantially transparent to said first frequency, in response to said third frequency.

The second layer may be disposed between the third layer and the first layer, and the third layer may become transparent to the second frequency, in response to the third frequency.

The layers may comprise respective different photoreactive or photochromic compounds, such as leuco dyes.

According to another aspect of the invention, there is provided a method of writing a visible image to the medium, comprising exposing the first layer to electromagnetic radiation of the first frequency so as to produce the visible image in the first layer. The further layer may subsequently be exposed to electromagnetic radiation of the second frequency such that the further layer becomes substantially opaque to electromagnetic radiation of the first frequency. Prior to the step of exposing the first layer to electromagnetic radiation of the first frequency, the further layer may be exposed to electromagnetic radiation of the third frequency such that the further layer becomes substantially transparent to electromagnetic radiation of the first frequency.

According to another aspect of the invention, there is provided a method of writing a visible image to a medium, the medium comprising a first layer reactive to electromagnetic radiation of a first frequency to exhibit a visible change, the method comprising exposing the first layer to electromagnetic radiation of the first frequency, and subsequently applying a protective layer over the first layer, the protective layer blocking electromagnetic radiation of said first frequency from acting on the first layer, the visible change being visible through the further layer. An advantage of this arrangement is that the construction of the medium is simplified.

The protective layer may be arranged to produce a visual effect when the image written to the first layer is viewed therethrough.

In either method, the spatial distribution and/or intensity of the electromagnetic radiation of the first frequency may be controlled so as to create a visible image in the first layer. The spatial distribution may be controlled by means of a spatially variant shutter or an optical imaging apparatus, or by scanning a beam of electromagnetic radiation of the first frequency across the medium.

According to another aspect of the present invention, there is provided a method of producing a lenticular image, in which a light sensitive medium is provided with a lenticular layer, and multiple images are written at different angles onto the medium through the lenticular layer. In this way, the multiple images are automatically aligned with the lenses on the lenticular layer, so that the different images are viewable at different angles through the lenticular layer.

Using direct energy imaging systems such as the one described in this document will enable the production of blank ready to print lenticular sheets and the development of devices that are capable of taking standard photos and turning them into vibrant 3D and animated media memories, promotional goods and technical photographic illustrations.

According to another aspect of the present invention, there is provided a photoluminescent display, comprising an array of pixels each comprising a plurality of phosphorescent elements arranged to emit visible light of a respective different colour when excited by incident light of a predetermined frequency. The display may include a microlens array layer comprising a plurality of microlenses, each arranged to direct the incident light onto a corresponding one of the phosphorescent elements. The display may include an array of lenses arranged to direct light emitted from respective ones of the pixels.

The pixels may be arranged in a plurality of groups of said phosphorescent elements, each of said groups is arranged to be visible at a different angle through a corresponding one of the array of lenses, for example to produce a stereoscopic display.

The method described above does not require a backlight and does not require high-powered laser systems such as laser TV. This method of creating a picture can be used to produce images with long phosphorescing time to provide fixed rewritable images, or short phosphorescing times rapid changes in the image.

The low energy consumption of this method of displaying images opens up the opportunity to produce large displays which can be powered with renewable sources of energy such as solar, wind and other such methods of producing renewable electricity.

The incident light may be generated by heterodyning two or more beams to generate light of the required frequency.

### Brief Description of the Drawings

There now follows, by way of example only, a detailed description of embodiments of the present invention, with reference to the figures identified below.
Figure 1 is a cross-sectional diagram, not to scale, of a medium in a first embodiment.
Figure 2 is a cross-sectional diagram, not to scale, of the medium in a state in which writing is prevented prior to an image being written to the medium.
Figure 3 is a cross-sectional diagram, not to scale, of the medium in a state in which writing is enabled.
Figure 4 is a cross-sectional diagram, not to scale, of the medium having an image written thereto.
Figure 5 is a cross-sectional diagram, not to scale, of the medium in a state in which further writing is disabled.
Figure 6 is a cross-sectional diagram, not to scale, of the medium showing blocking of further writing.
Figure 7 is a cross-sectional diagram, not to scale, of the medium showing a writing method employing an LCD panel.
Figure 8 is a cross-sectional diagram, not to scale, of an alternative embodiment of the medium.
Figure 9 is a cross-sectional diagram, not to scale, of a writing method using the alternative medium embodiment.
Figure 10 is a cross-sectional diagram, not to scale, of a mediums in another embodiment.
Figure 11 is a cross-sectional diagram, not to scale, of the medium of Figure 10 having an image written thereto.
Figure 12 is a cut-away perspective view of the medium of Figure 10 with a plurality of images written thereto.
Figure 13 is a schematic diagram showing the medium of Figure 10 having two different images viewable therefrom, at different angles.
Figure 14 is a schematic diagram of an apparatus for writing a plurality of images to the medium of Figure 10.
Figure 15 is a cross-sectional diagram, not to scale, of a photoluminescent display in a further embodiment of the present invention.
Figure 16 is a plan view of an array of photoluminescent elements in the embodiment of Figure 15.
Figure 17 is a cross-sectional diagram, not to scale, of a photoluminescent display in a yet further embodiment of the present invention.
Figures 18a and 18b are orthogonal cross-sectional views of a photoluminescent display in a further embodiment of the invention.
Figure 19 is a schematic diagram of a beam tracking apparatus in the embodiment of Figures 18a and 18b.

### Detailed Description of the Embodiments

### First Embodiment

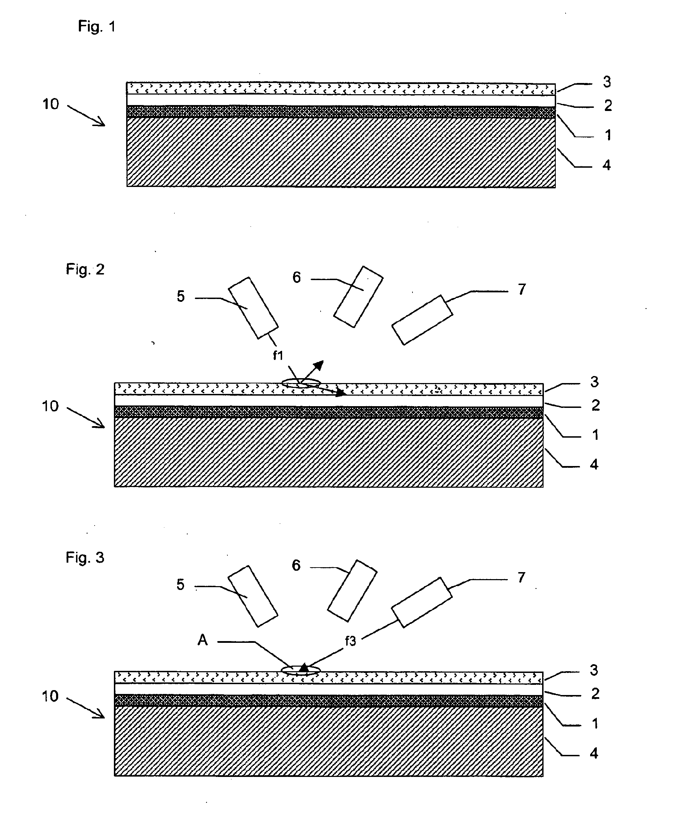

As shown in Figure 1, a photoreactive medium 10 according to the first embodiment comprises a substrate 4, of flexible or rigid material. The substrate may be of plastics, paper, wood or fabric, for example. A first layer 1 is applied to the substrate, comprising a material reactive to light at a first frequency f1 to exhibit a visible change, such as a change in colour or shade. The first layer 1 may comprise a plurality of materials that each exhibit a different colour change, either arranged in a spatially distinct pattern, or sensitive to different frequencies within the range of frequency f1, to enable colour imaging.

A second layer 2 is applied over the imaging layer, comprising a material that allows frequency f1 to pass through until exposed to a light of a second frequency f2, whereupon the material changes state so as to block frequency f1. A third layer 3 is applied over the first protective layer 3, comprising a material that blocks frequency f1 until exposed to light of a third frequency f3, whereupon the material changes state so as to allow light of the first or second frequency to pass through the third layer 3.

The frequencies f1 , f2 and f3 are preferably discrete and spaced apart from one another in frequency. In one example, the light reactive material of the first layer 1 is sensitive to ultraviolet light, so that frequency f1 is in the range 200 to 450 nm, while the light reactive materials of the second and third layers 2, 3 are in the near infrared and infrared ranges, such as between 900 and 1700 nm. Each frequency f1, f2, f3 may be monochromatic or polychromatic, with a narrow or broad bandwidth.

The light reactive materials of the first, second and/or third layers 1, 2, 3 preferably change state, as described above, irreversibly and are therefore photoreactive. Alternatively, the change of state may be reversible, in which case the material is photochromic. Suitable materials include leuco dyes, which may be encapsulated within a matrix.

The layers 1, 2 and/or 3 may be applied as liquid coatings that are dried to form the respective layers, or may be preformed and bonded together.

An imaging process using the photoreactive medium 10 of the first embodiment will now be described with reference to Figures 2 to 6. Imaging apparatus comprises a first light source 5 for generating light of frequency f1, a second light source 6 for generating light of frequency f2, and a third light source 7 for generating light of frequency f3. The light sources may be laser diodes or LEDs, for example. The use of laser light is preferred at least for frequency f1, because the narrow divergence characteristics facilitate accurate, high-quality writing.

In the state shown in Figure 2, the third layer 3 is opaque to frequency f1, so that light from the first light source 5 is reflected and/or absorbed by the third layer 3 and does not reach the first layer 1, which is therefore protected from writing. To enable writing, as shown in Figure 3, the area A to be written is irradiated with light of frequency f3, from the third light source 7; this changes the state of the third layer 3 so as to allow frequency f1 to pass through.

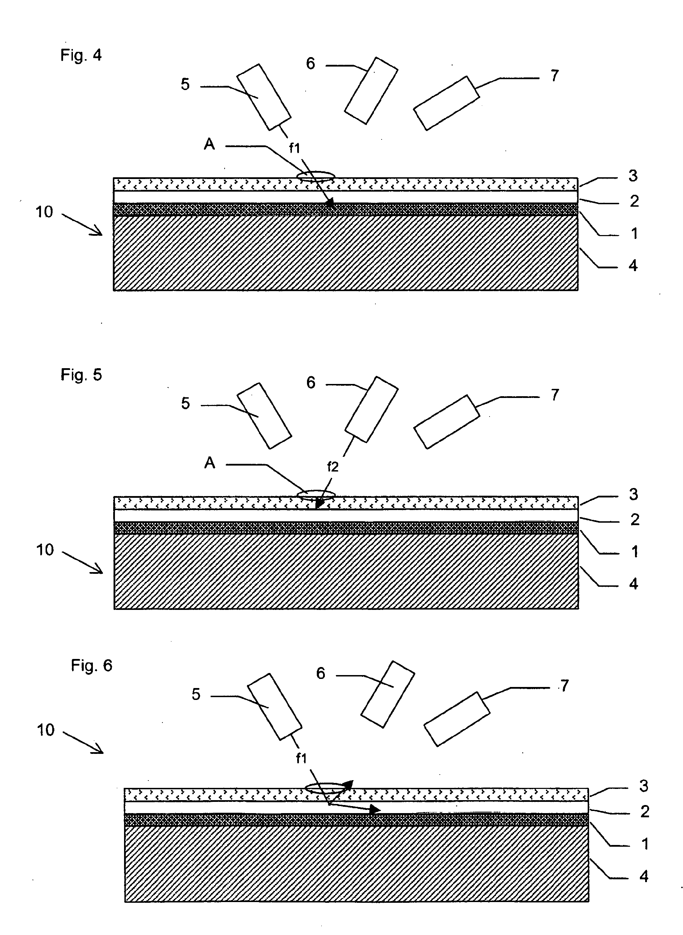

To write an image in area A, as shown in Figure 4, light of frequency f1 from the first light source 5 is irradiated onto the first layer 1, passing through the second and third layers 2,3, to change the visible state of the first layer 1 in the area A. The image in the area A may be controlled by scanning and/or varying the intensity of the light from the first light source 5.

When the desired image has been created in the area A, further writing to the area A is prevented as shown in Figure 5, by irradiating the second layer 2 in the area A with light of frequency f2, such that the irradiated area subsequently blocks frequency f1, as shown in Figure 6. In this way, an image is permanently recorded on the medium 10 using light of frequency f1, but further changes to the image are prevented. The third layer 3 does not perform any optical function in this state, but may serve as a protective layer against physical damage, such as scratching. In this state the second and third layers 2, 3 are substantially transparent to light in at least part of the visible range, so that the image recorded in the first layer may be seen.

### Writing Methods

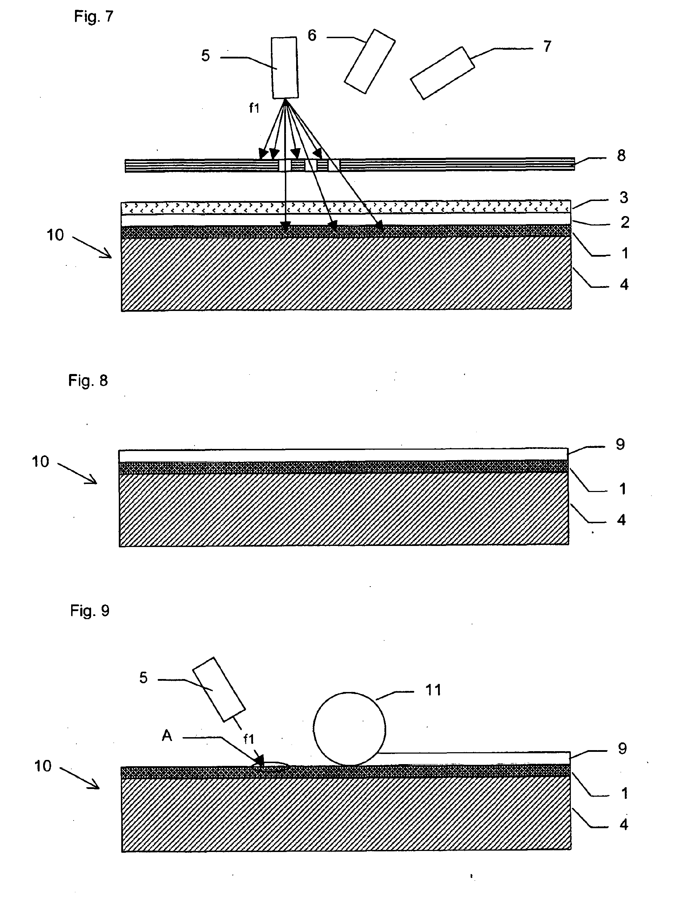

In one embodiment of a writing method, the exposure of the first layer 1 to frequency f1 may be controlled by varying the output of the first light source 1 and/or using a shutter between the first light source 1 and the medium 10. As shown in Figure 7, the shutter may comprise a controllable spatially variant shutter such as an LCD panel 8 having a pixel arrangement, each pixel acting as a shutter to control the amount of light reaching a corresponding pixel area of the first layer 1, and hence the degree of colour or shade exhibited by that area. Each pixel may be a binary pixel, in which case the time of exposure is controlled, or a variable transparency pixel, in which case the amount may be controlled by the transparency.

In a colour writing method in which the first layer 1 responds to different frequencies to exhibit a different colour change, the first layer 1 may be illuminated in turn with the different frequencies, and the LCD panel 8 is controlled to determine the illumination of each pixel area by the corresponding frequency. This method is analogous to multi-colour lithographic printing, with the LCD panel 8 acting as a digital printing plate to transfer each colour to the medium 10 in turn.

In another colour writing method in which the first layer 1 contains materials exhibiting different colour changes in a spatially distinct pattern, the LCD panel 8 may have a pixel pattern corresponding to the spatially distinct pattern, so that illumination of each material is controllable independently.

In another application of the first embodiment, a photographic image is written to the first layer at the frequency f1, using an optical imaging system such as a lens for focussing the image on the first layer 1, prior to fixing with uniform illumination by the frequency f2.

In another embodiment of a writing method, the first, second and third light sources 5, 6, 7 are housed in a print head that is scanned across the medium 10 and arranged in such a way that light from the third, first and second light sources 7, 5, 6 falls onto an area in succession. Alternatively, beams from the first, second and third light sources may be scanned across the medium 10 by optical means, such as reflective or refractive parts.

Light of the second and third frequencies may be scanned across the medium 10, respectively after and before writing of the scanned area by the first frequency. Alternatively, the medium 10 may be prepared for writing by substantially uniform illumination by frequency f3. After writing by the frequency f1, the image may be fixed by substantially uniform illumination by frequency f2.

### Alternative Media

In one alternative medium 10, the third layer 3 is omitted and other means are employed to prevent light of frequency f1 from reaching the first layer 1 before an image is to be written. For example, the medium 10 may be kept in an environment that is substantially free of light of frequency f1, or may be covered by a removable protective layer that is opaque to frequency f1.

In another alternative medium, a single layer performs the functions of the second and third layers 2, 3 in the first embodiment. The single layer contains a photochromic material that is reversible between a first state in which the material is opaque to the frequency f1 and a second state in which the material is transparent to the frequency f1. The transition from the first to the second state is activated by light of frequency f3, while the transition from the second to the first state is activated by light of the frequency f2. Since the change is reversible, further images may be written to the first layer after the initial writing step. The change of state that produces a visible image in the first layer may also be reversible, so that the image may be erased and a new image rewritten in the first layer.

In another alternative medium 10, as shown in Figure 8, a removable and replaceable protective layer 9 is provides over the first layer 1, instead of the second and third layers 2, 3. The protective layer 9 comprises a material that is substantially opaque to frequency f1, and is not photoreactive or photochromic. The protective layer 9 is preferably flexible.

In a writing method using this alternative medium 10, the medium 10 is supplied for printing with the protective layer 9 applied. When the medium 10 is to be printed, the protective layer 9 is physically removed, either manually or by means within the printing apparatus, such as a roller 11. Printing is performed using the first light source 5; the second and third light sources 6, 7 are not necessary in this embodiment. The protective layer 9 is then reapplied and permanently bonded to the first layer 1, for example using the roller 11 within the printing apparatus. The reapplied protective layer 9 need not be the same protective layer 9 that was previously removed. The reapplied protective layer 9 may be arranged to produce a visual effect when the printed first layer 1 is viewed therethrough; for example, the protective layer 9 may comprise lenticular elements arranged to produce a multiple view image, such as a moving sequence of images or a 3D effect.

### Lenticular Imaging

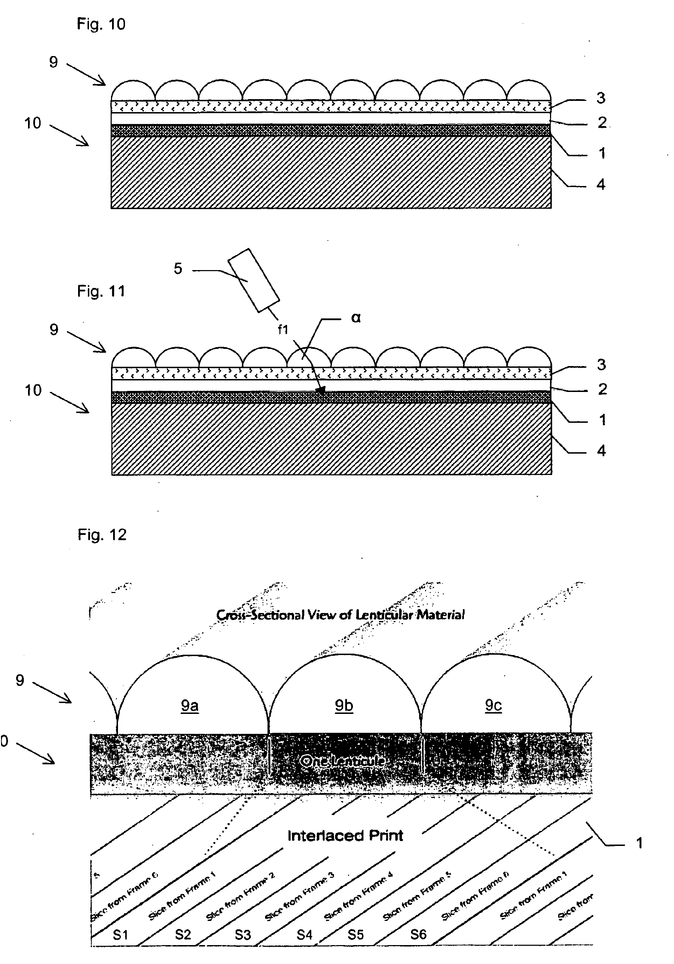

In a further embodiment of the invention as shown in Figures 10 to 14, a lenticular imaging medium 10 includes a lenticular layer 9, comprising an array of lenses. The lenticular layer 9 may be applied as a sheet onto or above the third layer 3.

Figure 11 illustrates a method of lenticular imaging in this embodiment. First, writing to the first layer 1 is enabled as in any one of the embodiments described above. Then, an image is written to the first layer 1 using the first light source 5, emitting a light beam at frequency f1. The angle of incidence α of the light beam on the medium 10 is selected according to the angle at which the resultant image is to be viewed. The writing angle of the image may be the same as the intended viewing angle of the image, but this is not essential since the frequency of radiation used for writing may be different from that used for viewing, and the refractive index of the lenticular layer 9 may be different for the writing and viewing frequencies.

In this way, different images may be recorded on the medium by varying the angle α at which the different images are written. This arrangement is advantageous over the prior art, in that there is no need to print the different images and then align the lenticular layer with the images. Instead, because the lenticular layer 9 is applied to the medium 10 before writing, and the image is written through the lenticular layer, alignment between the images and the lenticules is automatically ensured.

Figure 12 shows the effect of writing different images at different angles α through the lenticular layer 9. In this specific example, the lenses comprise cylindrical lenticules 9a, 9b, 9c having parallel longitudinal axes. In the example shown, the image written at each angle α1...α6 passing through lenticule 9b ... comprises interlaced image slices S1...S6, so that each slice comprises a part of an image written from, and viewable from, a specific angle.

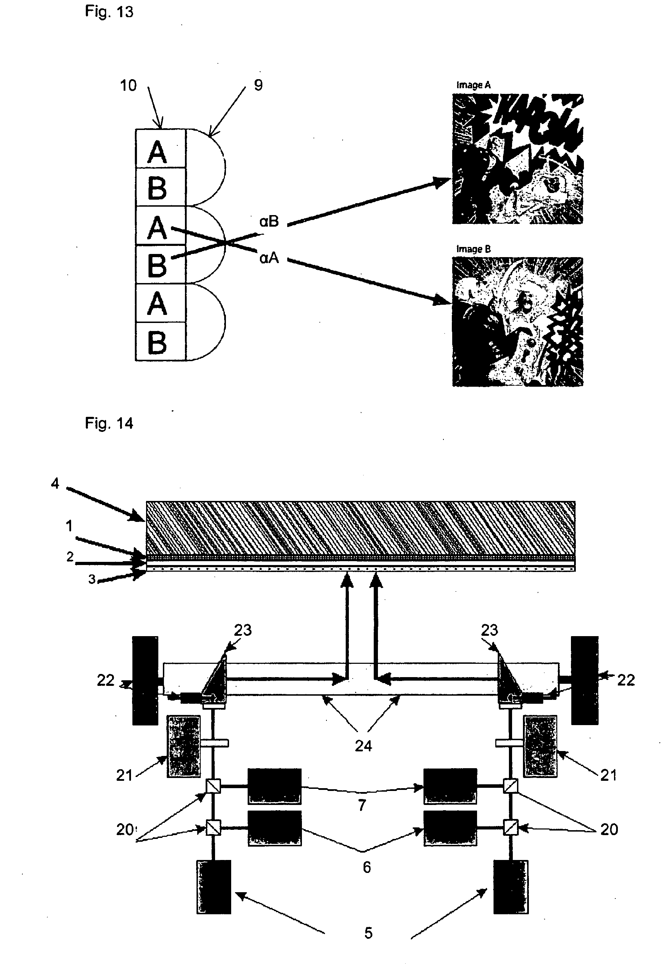

By changing the angle at which the medium 10 is viewed, a sequence of images may be seen in succession, for example to create an illusion of a moving image. Additionally or alternatively, stereoscopic images may be written and viewed. This effect is shown schematically in Figure 13, in which images A and B are interlaced on the medium 10, viewable at different angles αA and αB. As the viewer changes viewing position, images A and B are seen in turn, giving the illusion of blending from one image to the other. Depending on the lenticular layer 9, more images can be added, giving a better illusion of movement and/or perspective.

Figure 14 shows an example of a print head suitable for producing lenticular images in this embodiment. Light from the first, second and third light sources 5, 6, 7 is combined with optical combiners 20 to produce a single beam, which passes through a focussing system 21 to control the focal length of the beam. The angle of the beam is then determined by a rotatable angular optical system 23 and an optically coated reflective surface 24, controlled by rotation devices 22.

The embodiments described above are illustrative of rather than limiting to the present invention. Alternative embodiments apparent on reading the above description may nevertheless fall within the scope of the invention.

### Light Activated Display

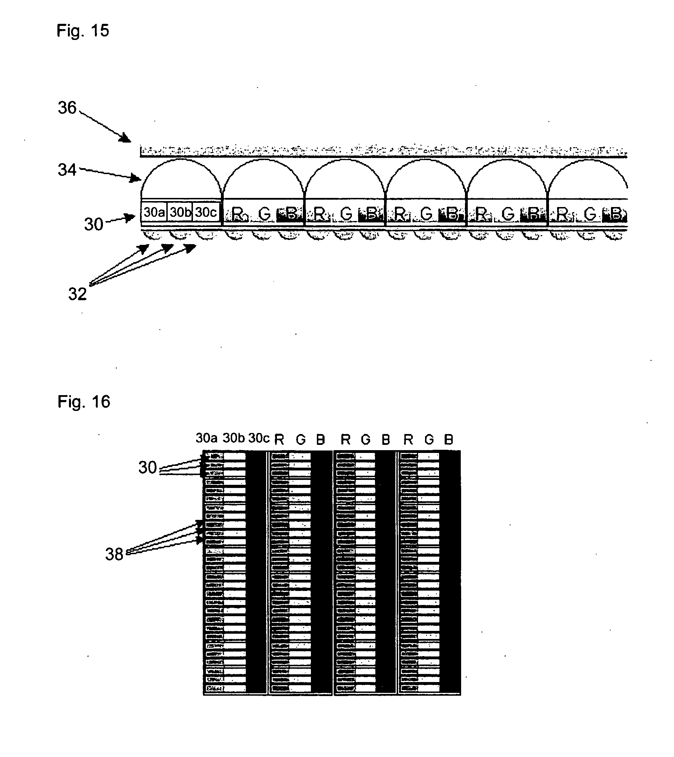

Further embodiments of the present invention, comprising a light-activated display, are shown in Figures 15 to 19 of the drawings.

As shown in Figure 15, the medium 10 according to this embodiment comprises a phosphorescent layer 30 of phosphorescent elements arranged in pixels, with each pixel comprising three elements 30a, 30b, 30c able to phosphoresce with respectively red, green and blue colour when excited by light of a predetermined frequency, preferably in the ultraviolet (UV) range. Preferably, the exciting light is laser light. The frequency of the exciting light may be the same for each of the three colours of phosphor, or each colour of phosphor may be excited by a different frequency.

Aligned with each element is a corresponding beam-targeting microlens in a microlens array layer 32, arranged to direct light incident from a range of different angles on the microlens, onto the corresponding element. The phosphorescent elements may be formed on the microlens array layer 32 as a coating.

On the opposite side of the phosphorescent layer 30 from the microlens array 32 is a colour display lens layer 34, comprising an array of lens each arranged to diffuse light from a corresponding triplet of red, green and blue phosphorescent elements 30a, 30b, 30c. The lens layer 34 may be omitted in displays where the different colours from the phosphorescent elements are naturally blended by the eye of the viewer. A transparent protective layer 36 may be provided over the lens layer 34, arranged to protect the lens layer 36 and/or to filter out unwanted frequencies emitted by the phosphorescent layer 30.

Figure 16 is a plan view of the phosphorescent layer 30, showing the array of phosphorescent elements 30a, 30b, 30c surrounded by a black mask 38 to improve contrast. However, the mask 38 is not essential, since the division between pixels is dictated by the microlens array 32.

The phosphorescent elements have no electrical connection and are completely passive, being excited by light of a specific frequency. The phosphorescent decay time is dependant on the type of display required.

An advantage of this construction is that it requires no back lighting and extremely low levels of energy to provide a high amount of colour and contrast.

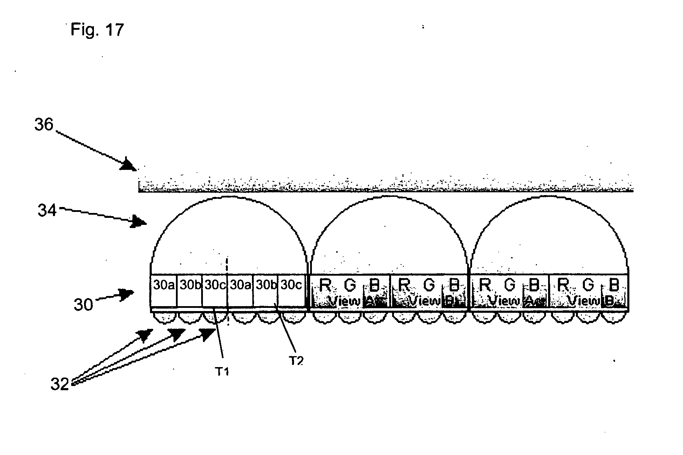

A variant is shown in Figure 17, in which each lens of the lens layer 34 is aligned with a plurality of triplets T1, T2 of phosphorescent elements 30a, 30b, 30c, such that each triplet is visible through the lens layer 34 at a respective different angle. In this way, corresponding ones of the triplets T1, T2 may be used to generate different images, each image being viewable at a different angle. In this way, a stereoscopic display may be provided, with a first set of triplets T1 providing a left eye view and a second set of triplets T2 providing a right eye view.

An optical beam scanner similar to that shown in Figure 14 may be used to scan a modulated beam comprising first, second and third frequencies over the medium 10 of the rewritable display in this embodiment. In this embodiment, the first, second and third frequencies are selected to excite respective ones of the phosphorescent elements within each triplet. Alternatively, the modulated beam may be of a single frequency arranged to excite each of the different phosphorescent elements.

Alternatively, an array of optical shutters may be used to select which of the phosphorescent elements 30a, 30b, 30c are excited for a specific image, such as the LCD panel 8 shown in Figure 7.

### Heterodyned Light Activated Display

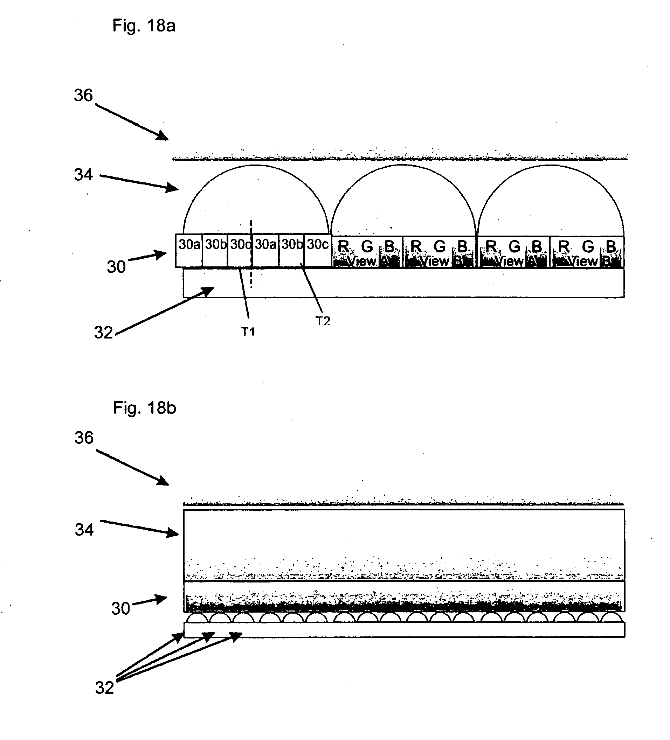

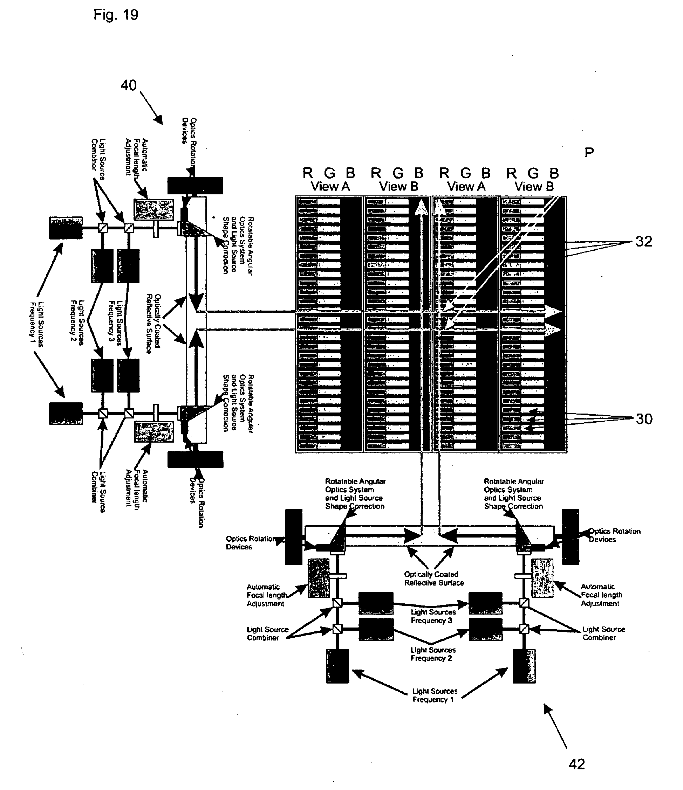

A further embodiment of the light activated display are shown in Figures 18a, 18b and 19. Figure 18a is a cross-section perpendicular to the longitudinal axes of the cylindrical lenses of the lens layer 34, while Figure 18b is a cross-section along a longitudinal axis of a cylindrical lens in the lens layer 34. Hence, the display construction is similar to that of the embodiment of Figure 17, except that the microlenses of the microlens array 32 are cylindrical lenses with longitudinal axes perpendicular to the longitudinal axes of the cylindrical lenses in the lens layer 34. These microlenses act as light guides to confine incident light to a specific area of the phosphorescent elements 30.

In this embodiment, the light frequencies required to activate the phosphorescent elements 30 are generated by heterodyning at a point of intersection of two beams.

Figure 19 shows a beam tracking apparatus arranged to steer beams so as to intersect at a required point of the display. A first beam tracker 40 is arranged to direct a first beam at a first selectable frequency f1 along a selected cylindrical lens of the microlens array 32. A second beam tracker 42 is arranged to direct a second beam at a second selectable frequency f2 perpendicular to the first beam, so as to interest with the first beam at a selected point. At the point P of intersection, sum and difference frequencies (f1 + f2) and (fl - f2) are generated by heterodyning, and these frequencies illuminate the phosphorescent elements 30 at that point P. The phosphorescent elements 30 are arranged to be activated by the sum or difference frequencies caused by heterodyning, so as to emit visible light.

Different heterodyned frequencies may be selected by selecting the first and second frequencies f1 and f2. The phosphorescent elements may be arranged to emit light only when activated by a specific heterodyned frequency. In this way, a phosphorescent element 30 may be selected to emit light of a specific colour, so that a colour display is provided. Alternatively or additionally, a phosphorescent element 30 of a specific colour may be selected by precise indexing of the first and second beams, to select only one phosphorescent element 30 at point P. In this case, the phosphorescent elements 30 may be replaced by a homogenous phosphorescent layer, since the individual pixels are defined by the microlens array 32.

The display shown in Figure 19 is arranged to produce a lenticular display, by displaying two different views at different angles through the lens layer 34. However, the heterodyning technique is equally applicable to a display arranged to produce a single view, which may be a non-lenticular display.

The beam trackers 40, 42 may be located substantially in the plane of the display, thereby producing a substantially flat, thin display device. The beam trackers may be positioned at adjacent sides of the display, or there may be beam trackers on all sides of the display, so that a separate beam tracker is arranged to illuminate each of the top, bottom, left and right hand sides of the display.

The phosphorescent elements may be substantially transparent to the unheterodyned frequencies f1, f2, thereby allowing the beams to pass through. A plurality of two-dimensional displays may be placed one on top of the other to form a three-dimensional display, with two or more beam scanners 40, 42 arranged to cause their respective beams to intersect at any selected point in the three-dimensional display. This may be used to display a three-dimensional object viewable from almost any angle. The three-dimensional display may be cylindrical, formed for example from stacked circular two-dimensional displays.

### Alternative Embodiments

Alternative embodiments may be envisaged on reading the above disclosure, which nevertheless fall within the scope of the following claims.

## Claims

1. A medium comprising a first layer (1), and second and third layers (2, 3) provided over the first layer (1), the first layer (1) being reactive to electromagnetic radiation of a first frequency (f1) to exhibit a visible change, the second layer (2) being reactive to electromagnetic radiation of a second frequency (f2) to change from a first state in which the second layer (2) is substantially transparent to electromagnetic radiation of the first frequency (f1) to a second state in which the second layer (2) is substantially opaque to electromagnetic radiation of the first frequency (f1), and the third layer (3) being reactive to electromagnetic radiation of a third frequency (f3) to change from a first state in which the third layer (3) is substantially opaque to electromagnetic radiation of the first frequency (f1), and blocks electromagnetic radiation of the first frequency (f1) from acting on the first layer (1), to a second state in which the third layer (3) is substantially transparent to electromagnetic radiation of the first frequency (f1).

2. The medium of claim 1, wherein the second layer (2) is disposed between the third layer (3) and the first layer (1), the third layer (3) being arranged to become substantially transparent to the second frequency (f2), in response to the third frequency (f3).

3. The medium of claim 1 or claim 2, wherein the change of the third layer (3) from the first state to the second state is irreversible.

4. The medium of any preceding claim, wherein the change of the first and/or second layer (1; 2) from the respective first state to the second state is irreversible.

5. The medium of any preceding claim, including a lenticular layer (9) covering the third layer (3).

6. A method of writing a visible image to the medium of any preceding claim, comprising exposing the first layer (1) to electromagnetic radiation of the first frequency so as to produce the visible image in the first layer (1).

7. The method of claim 6, further comprising subsequently exposing the second layer (2) to electromagnetic radiation of the second frequency (f2) such that the second layer (2) becomes substantially opaque to electromagnetic radiation of the first frequency (f1).

8. The method of claim 7, further comprising, prior to the step of exposing the first layer (1) to electromagnetic radiation of the first frequency (f1), exposing the third layer (3) to electromagnetic radiation of the third frequency (f3) such that the third layer (3) becomes substantially transparent to electromagnetic radiation of the first frequency (f1).

9. The method of any one of claims 6 to 8, wherein the step of exposing the first layer (1) to electromagnetic radiation of the first frequency (f1) comprises controlling the spatial distribution and/or intensity of the electromagnetic radiation of the first frequency (f1) so as to create a visible image in the first layer (1).

10. The method of claim 9, wherein the spatial distribution is controlled by means of a spatially variant shutter (8).

11. The method of claim 9, wherein the spatial distribution is controlled by means of an optical imaging apparatus.

12. The method of claim 9, wherein the spatial distribution is controlled by scanning a beam of electromagnetic radiation of the first frequency (f1) across the medium.

## Patentansprüche

1. Medium umfassend eine erste Schicht (1), und zweite und dritte Schicht (2, 3), die über der ersten Schicht (1) vorgesehen sind, wobei die erste Schicht (1) auf elektromagnetische Strahlung einer ersten Frequenz (f1) reagiert, um eine sichtbare Änderung aufzuweisen, wobei die zweite Schicht (2) auf elektromagnetische Strahlung einer zweiten Frequenz (f2) reagiert, um von einem ersten Zustand, in dem die zweite Schicht (2) im Wesentlichen für elektromagnetische Strahlung der ersten Frequenz (f1) transparent ist, in einen zweiten Zustand zu wechseln, in dem die zweite Schicht (2) im Wesentlichen für elektromagnetische Strahlung der ersten Frequenz (f1) opak ist, und die dritte Schicht (3) auf elektromagnetisch Strahlung einer dritten Frequenz (f3) reagiert, um von einem ersten Zustand, in dem die dritte Schicht (3) im Wesentlichen für elektromagnetische Strahlung der ersten Frequenz (f1) opak ist, und elektromagnetische Strahlung der ersten Frequenz (f1) davon abhält, auf die erste Schicht (1) einzuwirken, in einen zweiten Zustand zu wechseln, in dem die dritte Schicht (3) im Wesentlichen für elektromagnetische Strahlung der ersten Frequenz (f1) transparent ist.

2. Medium nach Anspruch 1, wobei die zweite Schicht (2) zwischen der dritten Schicht (3) und der ersten Schicht (1) angeordnet ist, wobei die dritte Schicht (3) eingerichtet ist, um für die zweite Frequenz (f2) in Reaktion auf die dritte Frequenz (f3) im Wesentlichen transparent zu werden.

3. Medium nach Anspruch 1 oder Anspruch 2, wobei die Änderung der dritten Schicht (3) vom ersten Zustand in den zweiten Zustand nicht rückgängig zu machen ist.

4. Medium nach einem der vorhergehenden Ansprüche, wobei die Änderung der ersten bzw. zweiten Schicht (1, 2) vom jeweiligen ersten Zustand in den zweiten Zustand nicht rückgängig zu machen ist.

5. Medium nach einem der vorhergehenden Ansprüche umfassend eine linsenförmige Schicht (9), die die dritte Schicht (3) bedeckt.

6. Verfahren zum Schreiben eines sichtbaren Bildes auf das Medium nach einem der vorhergehenden Ansprüche umfassend das Aussetzen der ersten Schicht (1) einer elektromagnetischen Strahlung der ersten Frequenz, um das sichtbare Bild in der ersten Schicht (1) zu erzeugen.

7. Verfahren nach Anspruch 6 ferner umfassend das nachfolgende Aussetzen der zweiten Schicht (2) einer elektromagnetischen Strahlung der zweiten Frequenz (f2), sodass die zweite Schicht (2) im Wesentlichen für elektromagnetische Strahlung der ersten Frequenz (f1) opak wird.

8. Verfahren nach Anspruch 7 ferner umfassend, vor dem Schritt des Aussetzens der ersten Schicht (1) einer elektromagnetischen Strahlung der ersten Frequenz (f1), das Aussetzen der dritten Schicht (3) einer elektromagnetischen Strahlung der dritten Frequenz (f3), sodass die dritte Schicht (3) im Wesentlichen für elektromagnetische Strahlung der ersten Frequenz (f1) transparent wird.

9. Verfahren nach einem der Ansprüche 6 bis 8, wobei der Schritt des Aussetzens der ersten Schicht (1) einer elektromagnetischen Strahlung der ersten Frequenz (f1) das Steuern der räumlichen Verteilung bzw. Intensität der elektromagnetischen Strahlung der ersten Frequenz (f1) umfasst, um in der ersten Schicht (1) ein sichtbares Bild zu erzeugen.

10. Verfahren nach Anspruch 9, wobei die räumliche Verteilung mittels eines räumlich variierenden Verschlusses (8) gesteuert wird.

11. Verfahren nach Anspruch 9, wobei die räumliche Verteilung mittels einer optischen Bildgebungseinrichtung gesteuert wird.

12. Verfahren nach Anspruch 9, wobei die räumliche Verteilung durch Scannen eines Strahls der elektromagnetischen Strahlung der ersten Frequenz (f1) über dem Medium gesteuert wird.

## Revendications

1. Milieu comprenant une première couche (1), et des deuxième et troisième couches (2, 3) prévues par-dessus la première couche (1), la première couche (1) étant réactive à un rayonnement électromagnétique d'une première fréquence (f1) pour présenterun changement visible, la deuxième couche (2) étant réactive à un rayonnement électromagnétique d'une deuxième fréquence (f2) pour passer d'un premier état dans lequel la deuxième couche (2) est sensiblement transparente à un rayonnement électromagnétique de la première fréquence (f1) à un deuxième état dans lequel la deuxième couche (2) est sensiblement opaque à un rayonnement électromagnétique de la première fréquence (f1), et la troisième couche (3) étant réactive à un rayonnement électromagnétique d'une troisième fréquence (f3) pour passer d'un premier état dans lequel la troisième couche (3) est sensiblement opaque à un rayonnement électromagnétique de la première fréquence (f1), et empêche un rayonnement électromagnétique de la première fréquence (f1) d'agir sur la première couche (1), à un deuxième état dans lequel la troisième couche (3) est sensiblement transparente à un rayonnement électromagnétique de la première fréquence (f1).

2. Milieu selon la revendication 1, dans lequel la deuxième couche (2) est placée entre la troisième couche (3) et la première couche (1), la troisième couche (3) étant conçue pour devenir sensiblement transparente à la deuxième fréquence (f2), en réponse à la troisième fréquence (f3).

3. Milieu selon la revendication 1 ou 2, dans lequel le passage de la troisième couche (3) du premier état au deuxième état est irréversible.

4. Milieu selon l'une quelconque des revendications précédentes, dans lequel le passage de la première et/ou de la deuxième couche (1 ; 2) du premier état respectif au deuxième état est irréversible.

5. Milieu selon l'une quelconque des revendications précédentes, comprenant une couche lenticulaire (9) qui recouvre la troisième couche (3).

6. Procédé de production d'une image visible sur le milieu selon l'une quelconque des revendications précédentes, comprenant l'exposition de la première couche (1) à un rayonnement électromagnétique de la première fréquence de manière à produire l'image visible dans la première couche (1).

7. Procédé selon la revendication 6, comprenant en outre l'exposition consécutive de la deuxième couche (2) à un rayonnement électromagnétique de la deuxième fréquence (f2) de sorte que la deuxième couche (2) devient sensiblement opaque à un rayonnement électromagnétique de la première fréquence (f1).

8. Procédé selon la revendication 7, comprenant en outre, avant l'étape d'exposition de la première couche (1) à un rayonnement électromagnétique de la première fréquence (f1), l'exposition de la troisième couche (3) à un rayonnement électromagnétique de la troisième fréquence (f3) de sorte que la troisième couche (3) devient sensiblement transparente à un rayonnement électromagnétique de la première fréquence (f1).

9. Procédé selon l'une quelconque des revendications 6 à 8, dans lequel l'étape d'exposition de la première couche (1) à un rayonnement électromagnétique de la première fréquence (f1) comprend le contrôle de la répartition dans l'espace et/ou de l'intensité du rayonnement électromagnétique de la première fréquence (f1) de manière à créer une image visible dans la première couche (1).

10. Procédé selon la revendication 9, dans lequel la répartition dans l'espace est contrôlée au moyen d'un obturateur variable dans l'espace (8).

11. Procédé selon la revendication 9, dans lequel la répartition dans l'espace est contrôlée au moyen d'un dispositif d'imagerie optique.

12. Procédé selon la revendication 9, dans lequel la répartition dans l'espace est contrôlée par balayage du milieu par un faisceau de rayonnement électromagnétique de la première fréquence (f1).
